# NEUE EUROPÄISCHE PATENTSCHRIFT

(11) **EP 0 407 952 B2**
(45) Veröffentlichungstag und Bekanntmachung des Hinweises auf die Entscheidung über den Einspruch: **04.06.1997**
(45) Hinweis auf die Patenterteilung: 23.02.1994
(21) Anmeldenummer: 90113122.7
(22) Anmeldetag: 10.07.1990
(51) Int. Cl.: C09D 9/04, C11D 3/44

(54) **Abbeizerzubereitung**
Paint remover
Décapant

(30) Priorität: 11.07.1989 DE 3922795; 07.02.1990 DE 4003700
(43) Veröffentlichungstag der Anmeldung: 16.01.1991
(73) Patentinhaber: GEORG SCHEIDEL JR. GMBH, D-96114 Hirschaid (DE)
(72) Erfinder: Scheidel, Hermann, D-8606 Hirschaid (DE)
(74) Vertreter: Herrmann-Trentepohl, Werner, Dipl.-Ing.

(56) Entgegenhaltungen:
- EP-A- 0 249 147
- EP-A- 0 355 763
- WO-A-89/11526
- CH-A- 670 832
- DE-A- 3 717 600
- FR-A- 2 044 670
- GB-A- 2 146 654
- US-A- 4 414 128

## Beschreibung

Die Erfindung betrifft eine chlorkohlenwasserstofffreie Abbeizerzubereitung in dickflüssiger, pastöser oder geleeartiger Form.

Zubereitungen zum Lösen von Beschichtungen und Klebern, d. h. insbesondere für Anstriche, in dickflüssiger, pastöser oder geleeartiger Form sind seit langem bekannt. Ursprünglich wurden solche Zubereitungen, vielfach als Abbeizer bezeichnet, regelmäßig auf Basis von Chlorkohlenwasserstoffen hergestellt. Chlorierte Kohlenwasserstoffe sind aber wegen ihrer Toxizität und aus Gründen des Umweltschutzes nicht mehr ohne weiteres einsetzbar. Es werden daher seit einiger Zeit erhebliche Anstrengungen unternommen, chlorkohlenwasserstofffreie Zubereitungen, die den chlorkohlenwasserstoffhaltigen an Wirksamkeit entsprechen, zu entwickeln.

Die EP-A-0 085 163 beschreibt erstmals ein Mittel zum Entfernen von Farben (Abbeizmittel), das völlig ohne Chlorkohlenwasserstoffe auskommt. Ähnliche Zubereitungen werden in der DE-A-34 38 399 beschrieben.

Diesen Produkten ist ein Gehalt von 80% oder mehr Lösemitteln gemein, was die Brennbarkeit der aufgebrachten Abbeizmittelschicht zur Folge hat. Wie von den Herstellern chlorkohlenwasserstoffhaltiger, also nicht brennbarer Abbeizer dargelegt wurde, kann das Risiko einer Entzündung selbst bei Verwendung von Lösemitteln mit einem Flammpunkt von mehr als 55°C nicht völlig ausgeschlossen werden. Hinzu kommt, daß Abbeizer auf der Basis von Dichlormethan preisgünstiger und wesentlich schneller in der Wirkung sind.

Die Fachleute aus dem Umweltschutz sind sich darüber einig, daß Chlorkohlenwasserstoffe sehr umweltschädlich sind und schon aus diesem Grunde ersetzt werden sollten. Auch die Humantoxizität ist bedenklich, zumal Dichlormethan in der MAK-Liste in der Gruppe IIIB eingestuft ist, was bedeutet, daß Verdacht auf ein krebserzeugendes Potential besteht.

Es herrscht deshalb ein Bedarf an einem Mittel zum Lösen von Beschichtungen, das nicht brennbar, preisgünstig und schnell wirksam ist.

Jahrelange Versuche, durch Zusatz von Wasser zu wasserlöslichen Lösemitteln mit hohem Flammpunkt zum Erfolg zu kommen, verliefen ergebnislos. In der Regel verdunstete das Wasser früher aus der aufgetragenen Abbeizerschicht als die organischen Lösemittel, so daß nach Einwirkzeiten von 1 bis 3 Stunden die Abbeizerschicht wieder brennbar war. Zudem wurde die beschichtungslösende Wirkung dieser Zusammensetzungen durch den Wassergehalt verlangsamt und verschlechtert.

Die EP-A-0 294 041 der Minnesota Mining and Manufacturing Company beschreibt Zusammensetzungen auf Basis von wenigstens einem dibasischen Ester, Wasser und wenigstens einem Verdickungsmittel. Diese Zusammensetzungen können mehr als 50% Wasser enthalten. Die beschriebenen Zusammensetzungen sind ferner als Handreiniger geeignet.

Untersuchungen haben gezeigt, daß die Abbeizwirkungen der aus der EP-A-0 294 041 bekannten Zusammensetzungen weit hinter der der damit verglichenen Dichlormethanabbeizer zurückbleibt. Zudem sind die in der Druckschrift beschriebenen Tests wenig praxisgerecht. Die Farbe wurde danach nur auf einer Fläche von etwa 1 cm Durchmesser aufgeweicht und abgeschabt. Auf so einer kleinen Fläche genügt natürlich schon ein geringer Kraftaufwand, um eine auch nur einigermaßen angelöste Schicht zu entfernen. In der Praxis wird dagegen breitflächig aufgetragen und ein breiter Spachtel eingesetzt, was eine gute Anlösung der Farbschicht für eine gründliche Entfernung voraussetzt. Ferner hat man es auch mit Ecken, Kanten und Vertiefungen zu tun, aus welchen die Farbe ausgewaschen werden muß. Fassadenfarben werden in der Regel abgedampft. d. h. ohne mechanische Spachteleinwirkung entfernt.

Die aus EP-A-0 294 041 bekannten Zusammensetzungen haben ferner den Nachteil, daß das Herstellungsverfahren recht kompliziert und energieaufwendig ist, da warm verarbeitet werden muß. Trotzdem schwitzt das Lösemittel nach dem Auftragen, z. B. auf Metallflächen, stark aus. Das Lösemittel kriecht - auch an senkrechten Flächen - weit über die mit Abbeizer eingestrichene Fläche hinaus und weicht dabei die benetzten Farbschichten etwas an, was ein randscharfes Abbeizen unmöglich macht.

Letztlich sind wohl diese Mängel dafür verantwortlich, daß das in der EP-A-0 294 041 beschriebene Mittel bislang noch nicht auf den Markt gebracht worden ist.

Trotzdem sind in dieser Druckschrift geschilderten Ansätze und Versuche recht interessant, da sie belegen, daß auch ein Gehalt von 20, 40 oder 60% eines dibasischen Esters in einer stabilen Emulsion ungefähr die gleiche Wirkung hat, wie der reine dibasische Ester und bei Gegenwart eines Netzmittels sogar besser wirken kann.

Die Aufgabe, einen praxisgerechten, möglichst umweltneutralen, nicht brennenbaren, geruchsmilden und preisgünstigen Ersatz für Chlorkohlenwasserstoffabbeizer zu entwickeln, bleibt aber ungelöst.

Im Rahmen der Entwicklung eines Lösers von Klebern wurde überraschend gefunden, daß Entschichtungsmittel mit hohem Wasseranteil und einem Gehalt an wassermischbaren und teilwassermischbaren Lösemitteln als Abbeizer eingesetzt werden können. Solche Zusammensetzungen, die aufgrund ihres relativ geringen Gehalts an Lösemitteln in der Gesamtmischung transparent bis leich opak sind, kommen in ihrer Wirkung den in der EP-A-0 294 041 beschriebenen nahe, bedürfen jedoch noch weiterer Verbesserung hinsichtlich ihrer Angriffsgeschwindigkeit und Lagerstabilität, um mit herkömmlichen Chlorkohlenwasserstoffenabbeizern konkurrieren zu können. Im Laufe weiterer Versuche ergab sich dann überraschenderweise, daß eine optimale Wirkungsgeschwindigkeit dann erzielt wird, wenn wasserlösliche Lösemittel mit teilwasserlöslichen und/oder nichtwasserlöslichen sowie einer wässrigen Netzmittellösung, die ein Verdickungsmittel enthält, so gemischt werden, daß eine opake, halbtransparente flüssige bis pastige oder geleeartige Masse erhalten wird. Eine derartige Mischung zeigt eine erstaunlich gute Lagerstabilität und gleichzeitig einen schnellen Angriff auf Anstriche, insbesondere auf Basis von Öl- und Alkydfarblacken, welche von reinen Lösungsmittelprodukten ohne Chlorkohlenwasserstoffe wesentlich langsamer angegriffen werden.

Dementsprechend betrifft die Erfindung eine Zubereitung der eingangs genannten Art mit den Merkmalen des Anspruchs 1.

Die erfindungsgemäße Zubereitung enthält wasserlösliche und wasserunlösliche Lösemittelkomponenten zu etwa gleichen Gew.-Teilen, d. h. in einem Gewichtsverhältnis von 40:60 bis 60:40. Die hier verwandten Begriffe "wasserlöslich", "wasserunlöslich" und "teifwasserlöslich" sind dabei gleichbedeutend mit wassermischbar, nicht mit Wasser mischbar und teilwassermischbar.

Unter Lösemitteln sind organische Lösungsmittel zu verstehen, die bei Raumtemperatur flüssig sind oder einen nur wenig über Raumtemperatur liegenden Schmelzpunkt haben und in der Zubereitung in gelöster Form vorliegen. Bevorzugt sind Lösemittel der Gefahrenklasse AIII mit einem Flammpunkt über 55°C. Diese bieten eine zusätliche Sicherheit gegen Gefährdungen durch eventuell auftretende Lösemitteldämpfe. Als wasserlösliche Lösemittel werden bevorzugt Ethylencarbonat und/oder Ethyllactat eingesetzt. Wird Ethylencarbonat oder ein anderes organisches Carbonat verwandt, ist es ratsam, die Zubereitung auf einen sauren pH-Wert einzustellen, da sich organische Carbonate erfahrungsgemäß im basischen Bereich zersetzen.

Andere bevorzugte wasserlösliche und/oder teilwasserlösliche Lösungsmittel sind N-Methylpyrrolidon, Propylencarbonat und insbesondere Alkylenglykolalkylether mit 1 bis 3 Alkyleneinheiten und bis zu 9 C-Atomen in den Alkylen- und bis zu 8 C-Atomen in den Alkylgruppen. Hier können insbesondere Monopropylenglykolmonoalkylether, Dipropylenglykolmonoalkylether, Diethylenglykolmonoalkylether, Monopropylenglykoldialkylether, Dipropylenglykoldialkylether, Triethylenglykoldialkylether, Tripropylenglycoldialkylether und Diethylenglykoldialkylether genannt werden. Als Ethergruppen kommen insbesondere Methyl-, Ethyl-, Propyl- und Butylgruppen in Frage. Vorzugsweise werden Mischungen von mehreren dieser Lösungsmittel eingesetzt.

Nicht eingesetzt werden sollen solche Alkylenglykolalkylether und auch Alkyletheracetate, die erwiesenermaßen teratogen und/oder mutagen sind.

Eine besonders gute Tiefenwirkung ergibt sich, wenn die vorgenannten Lösemittel zusammen mit Ethylencarbonat eingesetzt werden. Dabei macht das Ethylencarbonat 2 bis 10 Gew.-Teile der Gesamtzubereitung aus und vorzugsweise 4 bis 7 Gew.-Teile. Da Ethylencarbonat bei Raumtemperatur fest ist, muß es für den Einsatz in den erfindungsgemäßen Zubereitungen in der wässrigen oder einer organischen Komponente vorgelöst werden.

Ethylencarbonat bleibt beim Eintrocknen der aufgebrachten Zubereitung kristallin zurück und ermöglicht vorteilhaft das erneute Anlösen des an seinem Verwendungsort angetrockneten Abbeizers und damit eine Verlängerung der Abbeizwirkung.

Als teilwasserlösliche und/oder wasserunlösliche Lösemittel können vorteilhaft Ester, Ketone sowie Derivate der genannten Verbindungen verwandt werden. Bevorzugte Ester sind Mono- und Diacetate von Monoalkylenglykolen, insbesondere von Ethylenglykol und Propylenglykol, sowie deren Alkyletheracetate, wobei die Alkylen- und Alkylgruppen wie oben definiert sind. Weitere bevorzugte Lösemittel sind die Alkylester von Hydroxysäuren, insbesondere von Milchsäure und Glykolsäure, wobei Methyl-, Ethyl-, Propyl- und Butylestergruppen bevorzugt sind. Weiterhin können die Ester von Alkylenglykolen, wie oben definiert, eingesetzt werden oder auch Diester von dibasischen Säuren. Bevorzugte Ester sind Propylenglykoldiacetat, Ethoxypropylacetat, Methoxypropylacetat, Butyllactat, Glykolsäuren-butylester, sowie Ethylenglykol- und Propylenglykoldiacetat. Als Ketone werden übliche eingesetzt. Ein bevorzugtes Keton ist Diacetonalkohol. Ferner können Ester von Monocarbonsäure verwandt werden, vorzugsweise höhere Ester von Essigsäure mit bis zu 20 C-Atomen in der Alkylkette. Vorzugsweise enthalten die erfindungsgemäßen Zubereitungen die vorgenannten teilwasserlöslichen und/oder wasserunlöslichen Lösungsmittel in Form von Mischungen.

Weiterhin können die erfindungsgemäßen Zubereitungen 0,1 bis 3 Gew.-% Gerbsäure oder Tannin enthalten. Mit Hilfe dieses Zusatzes können Schwermetalle, die in den Anstrichstoffen gegebenenfalls enthalten sind, anschließend leichter ausgefällt werden und wird zugleich bei Metallen eine Rostschutzwirkung erzielt.

Die erfindungsgemäßen Zubereitungen werden durch Zusatz von Verdickungsmitteln auf die gewünschte Konsistenz eingestellt, wobei die Viskosität der Zubereitungen in einem weiten Bereich schwanken kann; sie beträgt bei relativ dünnflüssigen Zubereitungen 1.000 bis 1.500 mPas und bei sehr viskosen Gelen 2.500 bis 4.000 mPas. Insgesamt kann die Viskosität also in einem Bereich von 1.000 bis 4.000 mPas liegen. Durch geeignete Kombinationen von Verdickungs- und Lösungsmitteln hergestellte stabile Gele können aufgrund ihrer Eigenstabilität spezifisch leichtere und schneller flüchtige Lösungsmittel mit wesentlich niedrigerem Flammpunkt enthalten. Dies ist insbesondere bei Kleinstpackungen für spezielle Anwendungsbereiche, beispielsweise Abfüllungen von Entschichtungspasten für Bastler, von Vorteil, da von den dann doch recht geringen Mengen keine Gefahren ausgehen.

Die erfindungsgemäßen Zubereitungen enthalten vorzugsweise 0,5 bis 4 Gew.-% Verdickungsmittel in der wässrigen Lösung. Verdickungsmittel sind Celluloseether, wie Hydroxyethylcellulose, Hydroxypropylcellulose, Hydroxypropylmethylcellulose; Polysaccharide wie Pektine und Xanthangummi; pyrogene Kieselsäure, Bentonite und organische Derivate, sowie Schichtsilikate, die jeweils für sich allein oder in Kombination miteinander verwandt werden können. Beim Einsatz von fasrigen Verdickungsmitteln kann gegebenenfalls der erweichte Anstrichfilm mit Hilfe eingebrachter Netze oder sonstiger Hilfsmittel trocken abgezogen werden.

Die wässrige Tensidlösung enthält vorzugsweise 0,5 bis 8 Gew.-% übliche Tenside. Vorzugsweise werden Sulfosuccinate und Derivate davon sowie Alkylpolyalkylenglykolether, allein oder in Mischung, eingesetzt.

Die erfindungsgemäßen Zubereitungen sind gewöhnlich neutral eingestellt. jedoch ist auch eine saure oder alkalische Einstellung möglich. Die Einstellung auf einen sauren pH-Wert empfiehlt sich insbesondere dann, wenn Alkylencarbonate zugegen sind. Als Säuren werden vorzugsweise schwache organische Säuren, wie Citronensäure, verwandt.

Die erfindungsgemäßen Zubereitungen können übliche Stabilisierungs- und Konsevierungsmittel enthalten.

Die erfindungsgemäße Mischung mehrerer Lösemittel mit verschiedenen Löse- und Mischeigenschaften sowie Verdunstungsgeschwindigkeiten ergibt eine ausgezeichnete Tiefenwirkung und ermöglicht vor allem das Durchdringen verschiedenartiger, übereinander liegender Anstrichschichten. Dies ist deshalb besonders vorteilhaft, weil in der Praxis gerade bei Fenstern und Türen im Laufe der Jahre immer wieder anders zusammengesetzte Lacke nacheinander aufgebracht werden. Solche aufeinander aufgebrachten verschiedenen Schichten müssen in vertretbarer Zeit und mit wirtschaftlichem Aufwand entfernt werden. Dies ist erfindungsgemäß möglich. Die in der EP-A-0 294 041 beschriebenen Zusammensetzungen gehen dagegen davon aus, daß jeweils nur eine einheitliche Beschichtung zu lösen ist, führen also in diesem Fall zu keinem praktisch verwertbaren Ergebnis.

Bemerkenswert ist, daß die erfindungsgemäßen Zusammensetzungen dies ohne oder mit nur einem sehr geringen Zusatz an dibasischen Estern, der unter 10 Gew.-% der Gesamtmischung liegen kann, erreichen.

Die Erfindung wird durch die nachfolgenden Grundrezepte näher erläutert, in denen die Zusammensetzung nach Gew.-% angegeben ist. E ist eine flüssige Einstellung.

| Beispiele A bis E | | | | | |
|---|---|---|---|---|---|
| | A | B | C | D | E |
| Calciumlactat | 0,112 | 0,112 | 0,112 | -- | -- |
| Pektin, natürlich | 1,130 | 1,130 | 1,130 | -- | -- |
| Zitronensäure | 0,112 | 0,112 | 0,112 | -- | -- |
| Sorbinsäure | 0,060 | 0,060 | 0,060 | 0,060 | 0,060 |
| Hydroxyethylcellulose | 0,112 | 0,112 | -- | -- | -- |
| Hydroxypropylcellulosederivat (Methocel) | -- | -- | 0,112 | 1,000 | 0,700 |
| Wasser | 55,494 | 55,494 | 55,496 | 55,990 | 57,250 |
| Alkylpolyalkylenglykolether | 1,722 | 1,722 | 1,720 | 1,700 | 1,500 |
| Sulfobernsteinsäureester | 0,558 | 0,558 | 0,558 | 0,550 | 0,500 |
| N-Methylpyrrolidon | 3,500 | 2,000 | 3,500 | -- | -- |
| Ethylencarbonat | 4,000 | 7,000 | 4,000 | -- | -- |
| Propylencarbonat | 2,000 | 3,000 | 2,000 | -- | -- |
| Methoxypropoxypropanol | 4,500 | 4,000 | 4,500 | 10,000 | 10,000 |
| DBE- oder DES-Gemisch* | 17,000 | 9,000 | -- | 20,000 | 20,000 |
| Ethoxypropanol | 5,000 | -- | -- | -- | -- |
| Methyldiglykol | 4,000 | -- | -- | 10,000 | 10,000 |
| Methoxypropylacetat | -- | 7,000 | -- | -- | -- |
| Diacetonalkohol | -- | 6,000 | -- | -- | -- |
| Exxate 1000-Decylacetat | -- | 2,000 | -- | -- | -- |
| Ethoxypropylacetat | -- | -- | 6,00 | -- | -- |
| Propylenglykoldiacetat | -- | -- | 14,00 | -- | -- |
| Ethyldiglykol | -- | -- | 6,000 | -- | -- |
| Xanthangummi | 0,700 | 0,700 | 0,700 | 0,700 | -- |
| Viskosität mPas | 3000-3500 | 2000-2500 | 1500-2500 | 2500-3000 | 1000-1200 |

| | | | | | |
|---|---|---|---|---|---|
| *DBE = dibasischer Ester; DES = Diester-Solvent | | | | | |

| Beispiele F bis I | | | | |
|---|---|---|---|---|
| | F | G | H | I |
| Laponite RD | - | 2,5 | 1,5 | 3,0 |
| Calciumlactat | 0,11 | - | - | - |
| Pektin | 1,1 | - | - | - |
| Citronensäure | 0,11 | 0,1 | - | - |
| Sorbinsäure | 0,1 | 0,06 | - | 0,07 |
| Hydroxypropylcellulosederivat | 0,9 | 0,5 | 0,86 | 0,85 |
| Wasser | 55,4 | 54,3 | 54,0 | 47,9 |
| Alkylpolyalkylenglykolether | 1,72 | 1,64 | 1,64 | 1,64 |
| Sulfobernsteinsäurester (-derivat) | 0,56 | 0,54 | 0,5 | 0,54 |
| N-Methylpyrrolidon | 3,0 | 3,56 | - | 5,0 |
| Ethylencarbonat | - | 4,0 | 2,0 | - |
| Propylencarbonat | - | 2,0 | - | - |
| Methoxypropoxypropanol | 4,5 | 4,5 | 5,0 | 5,5 |
| Dibasicester | 14,0 | 9,0 | 9,0 | 14,0 |
| Ethoxypropanol | - | 5,0 | - | - |
| Methyldigylkol | 4,0 | 4,0 | 4,0 | 4,0 |
| Ethoxypropoxypropanol | 4,0 | - | 11,0 | 8,5 |
| Propylenglykoldiacetat | 5,2 | 8,0 | 10,5 | 6,0 |
| Ethyllactat | 5,0 | - | - | - |
| Xanthan | 0,3 | 0,3 | - | - |
| Natriumoleat | - | - | - | 3,0 |

| Beispiel K | |
|---|---|
| nat. Pektine | 0,5-3 % |
| Zitronensäure | 0,1-3 % |
| Calciumlactat | 0,1-1 % |
| synth. Tenside | 2-5 % |
| Cellulosederivate | 0,1-2 % |
| DES-Solvent | 10-20 % |
| N-Methylpyrrolidon | 5-10 % |
| Wasser | ad 100 % |

Die wässrig-zitronensaure Lösung bringt schon bei 2 % Pektin-Anteil eine recht gute Streichviskosität, welche durch sehr kleine Zusätze von Cellulose-Derivaten, z. B. 0,2 % verbessert werden kann. Übliche Netzmittel, allein oder in Kombination, oder auch in Kombination mit natürlichen Saponinen, verstärken die Wirkung. Als Zusätze eignen sich Glyzerin oder andere Polyalkohole oder N-Methylpyrrolidon, um die Durchdringung zu fördern und die Offenzeit zu erhöhen.

Bei einem Zusatz von 10% N-Methylpyrrolidon ist es möglich, Glasfasertapeten zu durchdringen und abzuziehen. Zusätze von nur 5 - 10 % DES-Solvent, oder Butoxyl, oder anderer Ester verhindern die Durchdringung der Tapete, lösen aber dafür die darauf befindliche Dispersionsfarbe.

Bekannte Produkte verdicken sich nach dem Aufbringen durch die Abgabe des Wasser-Netzmittelgemisches. Die Konzentration des Verdickungsmittel-Cellulose-Derivates im verbleibenden Wasser-Netzmittel-Gemisch nimmt also zu.

Das Mittel verändert seine Viskosität mit dem pH-Wert. Wird es z. B. mit Zitronensäure auf den pH-Wert von 3 eingestellt, so steigt durch die Berührung mit der alkalischen Farbe der pH-Wert auf 5 - 6 und die Viskosität nimmt ab.

Damit kann das Gel gerade dort eindringen, wo es mit der Farbe in Berührung kommt, während eine dickere, obere Schicht noch stabil bleibt und das Abtropfen des Gels von der Decke verhindert.

| Beispiel L | |
|---|---|
| synth. Tenside | 1,5-5 % |
| Cellulosederivate | 1,5-3 % |
| anorg. Verdickungsmittel | 0-3 % |
| N-Methylpyrrolidon | 5-10 % |
| Lösungsmittel (Ketone, Ester, Glykolether, etc.) | 20-40 % |
| Wasser | ad 100 % |

Bereits mit 20 - 30 % Gemisch organischer Lösemittel zur Netzmittellösung konnte eine Vielzahl von Beschichtungsstoffen gelöst werden.

Durch die Wechselwirkung Wasser-Netzmittel-Lösemittel kann hier auf den Zusatz von Säure verzichtet werden, und auch Pektine lassen sich, ab einem gewissen Lösungsmittelgehalt, durch andere Cellulose-Verdickungsmittel ersetzen.

Alle Zubereitungen sind frei von Aromaten, Aliphaten und Chlorkohlenwasserstoffen und nicht brennbar. Zudem sind sie biologisch leicht abbaubar und gut umweltverträglich.

Giftige Stoffe können ganz vermieden werden. Hautreizende Stoffe müssen nur bei bestimmten Anwendungszwecken in begrenzten Mengen zugesetzt werden, z. B. bis 10 % N-Methylpyrrolidon, welches erst in Zubereitungen mit mehr als 10 % als Reizstoff gilt.

## Patentansprüche

1. Chlorkohlenwasserstofffreie Abbeizerzubereitung in dickflüssiger, pastöser oder geleeartiger Form, dadurch gekennzeichnet, daß sie aus 40 bis 80 Gew.-Teilen, vorzugsweise 55 bis 70 Gew.-Teilen, einer wässrigen Lösung üblicher Tenside mit einem oder mehreren üblichen verdickungsmitteln, ausgewählt aus Celluloseethern, Polysacchariden, pyrogener Kieselsäure, Bentoniten und organischen Derivaten, Schichtsilikaten, jeweils allein oder in Kombination, und 20 bis 60 Gew.-Teilen, vorzugsweise 30 bis 45 Gew.-Teilen, eines Lösungsmittelgemisches besteht, das aus wasserlöslichen, teilwasserlöslichen und/oder wasserunlöslichen Lösemitteln zusammengesetzt ist, wobei in der Zubereitung wasserlösliche und wasserunlösliche Komponenten in einem Gewichts verhältnis von 40 : 60 bis 60 : 40 vorliegen, mit der Maßgabe, daß die Zubereitung keine aliphatischen, terpenoiden oder aromatischen Lösemittel enthält.

2. Zubereitung nach Anspruch 1, dadurch gekennzeichnet, daß sie als wasserlösliches Lösemittel Ethylencarbonat und/oder Ethyllactat enthält.

3. Zubereitung nach einem der Ansprüche 1 oder 2, dadurch gekennzeichnet, daß sie als wasserlösliches und/oder teilwasserlösliches Lösemittel N-Methylpyrrolidon, Propylencarbonat, Monopropylenglykolmonoalkylether,Dipropylenglykolmonoalkylether, Diethylenglykolmonoalkylether, Monopropylenglykoldialkylether, Dipropylenglykoldialkylether, Tripropylenglykolmonoalkylether, Tripropylenglykoldialkylether, Triethylenglykoldialkylether und/oder Diethylenglykoldialkylether enthält.

4. Zubereitung nach einem der Ansprüche 1 bis 3, dadurch gekennzeichnet, daß sie als teilwasserlösliche und/oder wasserunlösliche Lösemittel Ester, wie Propylenglykoldiacetat, Ethoxypropylacetat, Methoxypropylacetat, Butyllactat, Glykolsäure-n-butylester; Ketone sowie Derivate der genannten Verbindungen enthält.

5. Zubereitung nach einem der Ansprüche 1 bis 4, dadurch gekennzeichnet, daß sie Gerbsäure in einer Menge von 0,1 - 3 Gew.-% enthält.

6. Zubereitung nach einem der Ansprüche 1 bis 5, dadurch gekennzeichnet, daß die wäßrige Tensidlösung 0,5 bis 4 Gew.-% Verdickungsmittel enthält.

7. Zubereitung nach Anspruch 6, dadurch gekennzeichnet, daß sie Hydroxyethylcellulose, Hydroxypropylcellulose, Hydroxypropylmethylcellulose, Pektine oder Xanthan, jeweils allein oder in Kombination, als Verdickungsmittel enthält.

8. Zubereitung nach Anspruch 6 oder 7, dadurch gekennzeichnet, daß sie ein fasriges Verdickungsmittel enthält.

9. Zubereitung nach einem der Ansprüche 1 bis 8, dadurch gekennzeichnet, daß die wäßrige Tensidlösung 0,5 bis 8 Gew.-% Tenside, vorzugsweise Sulfosuccinate, Derivate davon, und/oder Alkylpolyalkylenglykolether und/oder natürliche Saponine enthält.

10. Zubereitung nach einem der vorstehenden Ansprüche, dadurch gekennzeichnet, daß sie auf einen sauren pH-Wert eingestellt ist.

11. Zubereitung nach Anspruch 10, dadurch gekennzeichnet, daß zur sauren Einstellung Zitronensäure verwandt wird.

12. Zubereitung nach einem der vorstehenden Ansprüche, dadurch gekennzeichnet, daß sie 1 bis 5 % Pektine enthält.

13. Zubereitung nach einem der vorstehenden Ansprüche, dadurch gekennzeichnet, daß sie gelartig bis dickflüssig so eingestellt ist, daß sie bei einem pH-Wert von 3 bis 4 eine höhere Gelviskosität aufweist, als bei einem pH-Wert von 6 bis 7.

14. Zubereitung nach einem der vorstehenden Ansprüche, dadurch gekennzeichnet, daß sie in Form eines stabilen Gels mit einer Viskosität von 2500 bis 4000 mPas vorliegt, das gegebenenfalls spezifisch leichtere und schneller flüchtige Lösemittelanteile enthält.

## Claims

1. A paint remover composition free of chlorinated haydrocarbons and having a viscous, pasty or gel-like form, **characterized in that** it consists of 40 to 80 parts by weight, preferably 55 to 70 parts by weight, of an aqueous solution of common surfactants with one or more common thickeners selected from cellulose ethers, polysaccharides, pyrogenic silicic acid, bentonites and organic derivatives, phyllosilicates, alone or in combination, and 20 to 60 parts by weight, preferably 30 to 45 parts by weight, of a solvent mixture composed of water-soluble, partially water-soluble and/or water-insoluble solvents, wherein the composition contains water-soluble in addition to water-insoluble components in a weight ratio of 40:60 to 60:40, provided that the composition does not contain aliphatic, terpenic or aromatic solvents.

2. A composition according to claim 1, **characterized in that** it contains ethylene carbonate and/or ethyl lactate as water-soluble solvent.

3. A composition according to any of claims 1 or 2, **characterized in that** it contains N-methyl pyrrolidone, propylene carabonate, monoproyplene glycol monoalkyl ether, dipropylene glycol monoalkyl ether, diethylene glycol monoalkyl ether, monopropylene glycol dialkyl ether, dipropylene glycol dialkyl ether, tripropylene glycol monoalkyl ether, tripropylene glycol dialkyl ether, triethylene glycol dialkyl ether and/or diethylene glycol dialkyl ether as water-soluble and/or partially water-soluble solvent.

4. A composition according to any of claims 1 to 3, **characterized in that** it contains ester, such as propylene glycol diacetate, ethoxypropyl acetate, methoxypropyl acetate, butyl lactate, glycolic acid n-butyl ester; kentones as well as derivatives thereof as partially water-soluble and/or water-insoluble solvents.

5. A composition according to any of claims 1 to 4, **characterized in that** it contains tannic acid in an amount of 0.1 to 3 parts by weight.

6. A composition according to any of claims 1 to 5, characterized in that the aqueous solution of a surfactant contains 0.5 to 4 parts by weight of thickener.

7. A composition according to claim 6, **characterized in that** it contains as thickeners hydroxyethyl cellulose, hydroxypropyl cellulose, hydroxypropyl methyl cellulose; pectines or xanthane; alone or in combination, respectively.

8. A composition according to claim 6 or 7, **characterized in that** it contains a fibrous thickener.

9. A composition according to any of claims 1 to 8, **characterized in that** the aqueous solution of a surfactant contains 0.5 to 8 parts by weight of surfactants, preferably sulphosuccinates, derivatives thereof and/or alkyl polyalkene glycol ethers and/or natural saponines.

10. A composition according to any of the preceding claims, **characterized in that** it is adjusted to an acid pH.

11. A composition according to claim 10, **characterized in that** citric acid is used for the acid adjustment.

12. A composition according to any of the preceding claims, **characterized in that** it contains 1 to 5 per cent pectines.

13. A composition according to any of the preceding claims, **characterized in that** it is adjusted in a gel-like to viscous state in such a manner that it exhibits a higher gel viscosity at a pH of 3 to 4 than at a pH of 6 to 7.

14. A composition according to any of the preceding claims, **characterized in that** it is present in the form of a stable gel having a viscosity of 2,500 to 4,000 mPas, said gel optionally containing solvent constituents with a lower volume weight and a higher volatility.

## Revendications

1. Composition décapante dépourvue d'hydrocarbures chlorés et en forme visqueux, pâteux ou en type de gélée, **caractérisée en ce qu'**elle consiste de 40 à 80 parties en poids, de préférence de 55 à 70 parties en poids, d'une solution aqueuse d'agents de surface usuels avec une ou plusieurs épaississants usuels, selectionnés par les éthers cellulosiques, les polysaccharides, l'acide silicique pyrogénique, les bentonites et dérivés organiques, les phyllosilicates, chacun seule ou en combinaison, et de 20 à 60 parties en poids, de prèfèrence de 30 à 45 parties en poids d'un mélange de solvants, qui est composé de solvants solubles dans l'eau, partiellement solubles dans l'eau et/ou insolubles dans l'eau, des composants solubles dans l'eau et insolubles dans l'eau étant présents dans la composition dans un rapport en poids de 40:60 à 60:40, pourvu que la composition est depourvue de solvants aliphatiques, terpeniques ou aromatiques.

2. Composition selon la revendication 1, **caractérisée en ce qu'**elle contient comme solvant soluble dans l'eau du carbonate d'éthylène et/ou du lactate d'éthyle.

3. Composition selon l'une des revendications 1 ou 2, **caratérisée en ce qu'**elle contient comme solvant soluble dans l'eau et/ou partiellement soluble dans l'eau du N-méthyle pyrrolidone, du carbonate de propylène, du éther monoalkylique de monopropylène glycol, du éther monoalkylique de dipropylène g.lycol, du éther monoalkylique de diéthylène glycol, du éther dialkylique de monopropylène glycol, du éther dialkylique de dipropylène glycol, du éther monoalkylique de tripropylène glycol, du éther dialkylique de tripropylène glycol, du éther dialkylique de triéthylène glycol et/ou du éther dialkylique de diéthylène glycol.

4. Composition selon l'une des revendications 1 à 3, **caratérisée en ce qu'**elle comprend comme solvants partiellement solubles dans l'eau et/ou insolubles dans l'eau de l'ester comme du diacétate de propylène glycol, de l'acétate de éthoxypropyle, de l'acétate de methoxypropyle, du lactate de butyle, de l'éster n-butyle de l'acide glycolique; des cétones aussi bien que des dérivés des composés mentionnés.

5. Composition selon l'une des revendications 1 à 4, **caractérisée en ce qu'**elle contient de l'acide tannique à une quantité de 0,1 - 3 % en poids.

6. Composition selon l'une des revendications 1 à 5, **caratérisée en ce que** la solution aqueuse d'agent de surface contient 0,5 à 4 % en poids d'un épaississant.

7. Composition selon la revendication 6, **caractérisée en ce qu'**elle contient comme èpaississant du hydroxyéthyle de cellulose, du hydroxypropyle de cellulose, du méthylhydroxypropyle de cellulose; des pectines ou du xanthane; chacun seule ou en combinaison.

8. Composition selon la revendication 6 ou 7, **caratérisée en ce qu'**elle contient un épaississant fibreux.

9. Composition selon l'une des revendications 1 à 8, **caratérisée en ce que** la solution acqueuse d'agent de surface contient de 0,5 à 8 % en poids d'agents de surface, de préférence des sulphosuccinates, des dérivés de cela et/ou des éthers d'alkylpolyalkylène glycol et/ou des saponines naturelles.

10. Composition selon l'une des revendications précédentes, **caractérisée en ce qu'**elle est ajustée à une valeur pH acide.

11. Composition selon la revendication 10, **caratérisée en ce que** pour l'ajustage acide, on utilise de l'acide citrique.

12. Composition selon l'une des revendications précédentes, **caratérisée en ce qu'**elle contient 1 à 5 % de pectines.

13. Composition selon l'une des revendications précédentes, **caractérisée en ce qu'**elle est ajustée en forme de gel jusqu'à viscosité, de façon qu'elle présente une viscosité de gel plus élevée à une valeur pH de 3 à 4 qu'à une valeur pH de 6 à 7.

14. Compsition selon l'une des revendications précédentes **caractérisée en ce qu'**elle est présente sous forme d'un gel stabile à une viscosité de 2500 à 4000 mPas, qui contient éventuellement des portions de solvant spécifiquement plus légères et plus rapidement volatiles.
